(19) Europäisches Patentamt
European Patent Office
Office européen des brevets

(11) **EP 4 647 800 A1**

(12) **EUROPEAN PATENT APPLICATION**

(43) Date of publication:
**12.11.2025 Bulletin 2025/46**

(51) International Patent Classification (IPC):
***G01S 5/16*** *(2006.01)*

(21) Application number: **24222766.8**

(52) Cooperative Patent Classification (CPC):
**G01S 5/16**

(22) Date of filing: **23.12.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.05.2024 US 202418658561**

(71) Applicant: **Trimble Inc**
**Westminster CO 80021 (US)**

(72) Inventor: **BURSILL, Adam**
**Westminster, 80021 (US)**

(74) Representative: **AWA Sweden AB**
**Matrosgatan 1**
**Box 5117**
**200 71 Malmö (SE)**

(54) **AUGMENTED REALITY DEVICE CALIBRATION USING DISTANCE MEASUREMENTS**

(57) Techniques are described for calibrating an AR device having a camera, an antenna, an EDM device, and a display. First and second distances to first and second points are captured using the EDM device. First and second camera images containing the first and second points are captured using the camera. First and second 2D screen coordinates for the first and second points on the display are determined using the first and second camera images. First and second 3D surface points for the first and second points are computed based on the first and second 2D screen coordinates and the first and second distances. A position of the EDM device is computed using a 3D vector formed between the first and second 3D surface points. A camera-to-antenna offset is computed based on the position of the EDM device and a known antenna-to-EDM offset.

FIG. 8

**Description**

BACKGROUND

The recent growth of virtual reality (VR) and augmented reality (AR) technologies has been remarkable. In most implementations, VR and AR systems include devices that allow digitally reproduced images to be presented to a user in a manner wherein they seem to be, or may be perceived as, real. A VR scenario typically involves presentation of digital or virtual image information without transparency to other actual real-world visual input, whereas an AR scenario typically involves presentation of digital or virtual image information as an augmentation to visualization of the actual world around the user.

Global navigation satellite systems (GNSS) use wireless signals that are transmitted from medium Earth orbit (MEO) satellites to GNSS receivers to determine position and velocity information for the GNSS receivers. Examples of currently operational GNSSs include the United States' Global Positioning System (GPS), the Russian Global Navigation Satellite System (GLONASS), the Chinese BeiDou Satellite Navigation System, and the European Union's (EU) Galileo. Today, GNSS receivers are used in a wide range of applications, including navigation (e.g., for automobiles, planes, boats, persons, animals, freight, military precision-guided munitions, etc.), surveying, mapping, and time referencing.

Despite the progress of VR and AR technologies, linking VR and AR devices to high-accuracy GNSS data has proven difficult. Accordingly, there is a need in the art for improved methods and systems related to VR and AR technology.

SUMMARY

A summary of the inventions are given below in reference to a series of examples. As used below, any reference to a series of examples is to be understood as a reference to each of those examples disjunctively (e.g., "Examples 1-4" is to be understood as "Examples 1, 2, 3, or 4").

Example 1 is a method of calibrating a device having a camera, an antenna, an electronic distance measurement (EDM) device, and a display, the method comprising: capturing, at a first time, a first distance to a first point using the EDM device and a first camera image containing the first point using the camera; capturing, at a second time, a second distance to a second point using the EDM device and a second camera image containing the second point using the camera; determining first and second 2D screen coordinates for the first and second points on the display using the first and second camera images; computing first and second 3D surface points for the first and second points based on the first and second 2D screen coordinates and the first and second distances; computing a position of the EDM device using a 3D vector formed between the first and second 3D surface points; and computing a camera-to-antenna offset based on the position of the EDM device and a known antenna-to-EDM offset.

Example 2 is the method of example(s) 1, wherein the first and second 3D surface points are computed further based on intrinsic parameters of the camera.

Example 3 is the method of example(s) 1-2, wherein the known antenna-to-EDM offset comprises a 3D vector between a phase center of the antenna and the position of the EDM device, and wherein the camera-to-antenna offset comprises a 3D vector between a position of the camera and the phase center of the antenna.

Example 4 is the method of example(s) 1-3, wherein determining the first and second 2D screen coordinates for the first and second points on the display includes: receiving a user input identifying the first and second 2D screen coordinates; or analyzing the first and second camera images to automatically identify the first and second 2D screen coordinates.

Example 5 is the method of example(s) 1-4, further comprising: displaying the first and second camera images on the display.

Example 6 is the method of example(s) 1-5, further comprising: displaying a model image on the display using the camera-to-antenna offset.

Example 7 is the method of example(s) 1-6, wherein the first point is positioned at a first surface and the second point is positioned at a second surface or the first point and the second point are positioned at a same surface.

Example 8 is the method of example(s) 1-7, wherein the device is an augmented reality (AR) device.

Example 9 is the method of example(s) 1-8, wherein the device comprises (i) a camera component including the camera and the display and (ii) a sensor component including the antenna and the EDM device, and wherein the camera component is separable from and configured to removably attach to the sensor component.

Example 10 is an apparatus comprising: an antenna; an electronic distance measurement (EDM) device having a known antenna-to-EDM offset from the antenna, wherein the EDM device is configured to capture, at a first time, a first distance to a first point and capture, at a second time, a second distance to a second point; a camera configured to capture, at the first time, a first camera image containing the first point and capture, at the second time, a second camera image containing the second point; and a display; wherein the apparatus is configured to: determine first and second 2D screen coordinates for the first and second points on the display using the first and second camera images; compute first and second 3D surface points for the first and second points based on the first and second 2D screen coordinates and the first and second distances; compute a position of the EDM device using a 3D vector formed between the first and second 3D surface points; and compute a camera-to-antenna offset based on the position of the EDM device and the known antenna-to-EDM offset.

Example 11 is the apparatus of example(s) 10, wherein the first and second 3D surface points are computed further based on intrinsic parameters of the camera.

Example 12 is the apparatus of example(s) 10-11, wherein the known antenna-to-EDM offset comprises a 3D vector between a phase center of the antenna and the position of the EDM device, and wherein the camera-to-antenna offset comprises a 3D vector between a position of the camera and the phase center of the antenna.

Example 13 is the apparatus of example(s) 10-12, wherein determining the first and second 2D screen coordinates for the first and second points on the display includes: receiving a user input identifying the first and second 2D screen coordinates; or analyzing the first and second camera images to automatically identify the first and second 2D screen coordinates.

Example 14 is the apparatus of example(s) 10-13, wherein the apparatus is further configured to display the first and second camera images on the display.

Example 15 is the apparatus of example(s) 10-14, wherein the apparatus is further configured to display a model image on the display using the camera-to-antenna offset.

Example 16 is the apparatus of example(s) 10-15, wherein the first point is positioned at a first surface and the second point is positioned at a second surface or the first point and the second point are positioned at a same surface.

Example 17 is the apparatus of example(s) 10-16, wherein the apparatus is an augmented reality (AR) device.

Example 18 is the apparatus of example(s) 10-17, further comprising: a camera component including the camera and the display; and a sensor component including the antenna and the EDM device, and wherein the camera component is separable from and configured to removably attach to the sensor component.

Example 19 is a non-transitory computer-readable medium comprising instructions that, when executed by one or more processors, cause the one or more processors to perform operations for calibrating a device having a camera, an antenna, an electronic distance measurement (EDM) device, and a display, the operations comprising: causing capturing, at a first time, a first distance to a first point using the EDM device and a first camera image containing the first point using the camera; causing capturing, at a second time, a second distance to a second point using the EDM device and a second camera image containing the second point using the camera; determining first and second 2D screen coordinates for the first and second points on the display using the first and second camera images; computing first and second 3D surface points for the first and second points based on the first and second 2D screen coordinates and the first and second distances; computing a position of the EDM device using a 3D vector formed between the first and second 3D surface points; and computing a camera-to-antenna offset based on the position of the EDM device and a known antenna-to-EDM offset.

Example 20 is the non-transitory computer-readable medium of example(s) 19, wherein the operations further comprise: displaying a model image on the display using the camera-to-antenna offset.

BRIEF DESCRIPTION OF THE DRAWINGS

The accompanying drawings, which are included to provide a further understanding of the invention, are incorporated in and constitute a part of this specification, illustrate embodiments of the invention and together with the detailed description serve to explain the principles of the invention. No attempt is made to show structural details of the invention in more detail than may be necessary for a fundamental understanding of the invention and various ways in which it may be practiced.

FIG. 1 illustrates an AR device comprising a camera component attached to a sensor component.

FIGS. 2A and 2B illustrate front and side views of AR device when a camera component is attached to a sensor component.

FIGS. 3A-3C illustrate front views of different AR devices having different camera components.

FIGS. 4A-4D illustrate example steps for calibrating an AR device.

FIG. 5 illustrates a block diagram of an AR device having a camera component and a sensor component.

FIG. 6 illustrates a block diagram of a data processor.

FIGS. 7A and 7B illustrate example steps for correlating an AR reference frame with a geospatial reference frame.

FIG. 8 illustrates a method of calibrating an AR device.

FIG. 9 illustrates a method of correlating an AR reference frame with a geospatial reference frame.

FIG. 10 illustrates an example computer system comprising various hardware elements.

In the appended figures, similar components and/or features may have the same numerical reference label. Further, various components of the same type may be distinguished by following the reference label with a letter or by following the reference label with a dash followed by a second numerical reference label that distinguishes among the similar components and/or features. If only the first numerical reference label is used in the specification, the description is applicable to any one of the similar components and/or features having the same first numerical reference label irrespective of the suffix.

DETAILED DESCRIPTION

A georeferenced three-dimensional (3D) model can be mapped to a real-world coordinate system, allowing the model to be displayed on an augmented reality (AR) device equipped with satellite positioning capabilities. For example, an AR device can be equipped with a Global Positioning System (GPS) or Global Navigation Satellite System (GNSS) receiver that measures the device's precise position relative to the 3D model so that the size and orientation of the 3D model can be properly rendered on a screen. Embodiments described herein relate to a calibration technique for an AR device in which a 3D offset between the device's camera and the GNSS receiver's antenna is computed using two surface measurements. Each of the surface measurements may include a distance measurement made using an electronic distance measurement (EDM) device and an image captured using the AR device's camera.

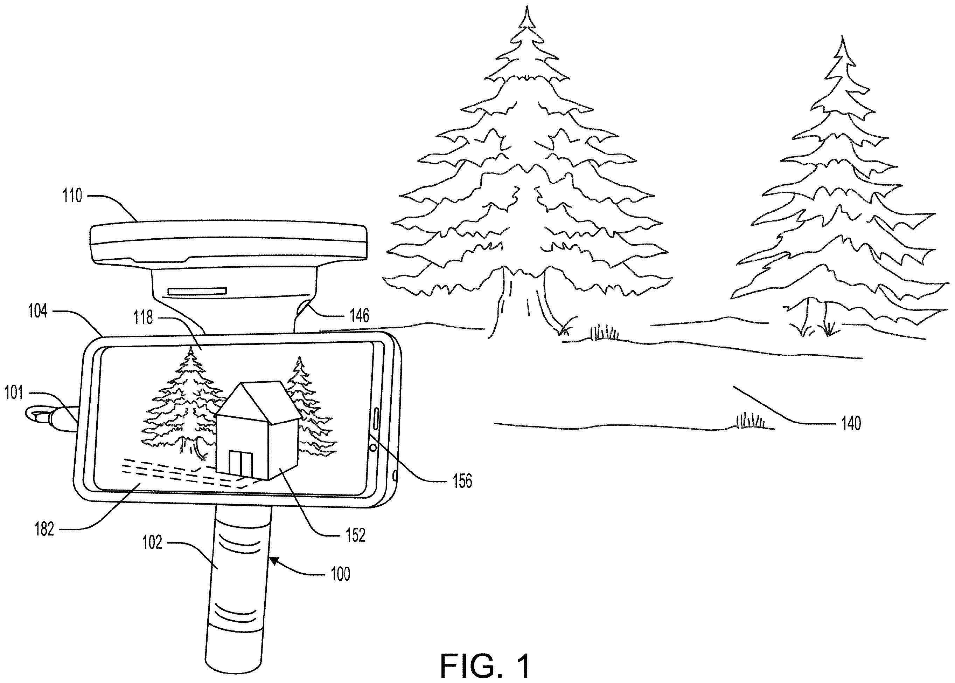

FIG. 1 illustrates an augmented reality (AR) device 100 comprising a camera component 104 attached to a sensor component 102, in accordance with some embodiments of the present disclosure. AR device 100 may be used at a potential construction site 140 or at any location where three dimensional (3D) rendered models may be displayed and superimposed onto images of real-world objects such as the earth, sky, water, stationary objects (e.g., roads, trees, buildings, etc.), movable objects (e.g., people, animals, vehicles, etc.), among other possibilities. Camera component 104 may include a camera (not shown in FIG. 1) for capturing a camera image 118 and a display 156 for displaying a model image 152 (e.g., an underground utility) that is superimposed onto camera image 118, collectively referred to as a superimposed image 182. Sensor component 102 may include a GNSS receiver 110 for providing high-accuracy position data of GNSS receiver 110. When the spatial relationship between GNSS receiver 110 and the camera of AR device 100 is known, the position data generated by GNSS receiver 110 may be used to determine the position of the camera, allowing proper placement of model image 152 onto camera image 118.

In some embodiments, sensor component 102 includes an EDM device 146 for measuring distances to discrete points within the field of view of the camera. In some embodiments, EDM device 146 is a device that transmits pulsed laser light towards a point of interest and measures the reflected pulses with a sensor. The distance between the device and the point of interest is estimated based on the return time or on phase measurements of the transmitted light. In some embodiments, EDM device 146 is a radar device that transmits an electromagnetic signal via an antenna towards the point of interest and measures the reflected electromagnetic signal via the transmitting antenna or a different receiving antenna. The distance between the radar device and the point of interest is estimated based on the return time. EDM device 146 may detect distances in a single direction or, in some embodiments, EDM device 146 may generate a distance map comprising a plurality of detected distances and the relative orientation for each distance.

Each of camera component 104 and sensor component 102 may comprise one or more structural components to support the attachment or integration of other components. For example, sensor component 102 may include a frame that allows attachment or integration of GNSS receiver 110 to the frame and attachment or integration of EDM device 146 to the frame. When attached or integrated to the frame, GNSS receiver 110 may have a known physical relationship to EDM device 146. As another example, camera component 104 may include a structural component that allows camera component 104 to be removably or permanently attached to sensor component 102. Similarly, sensor component 102 may include a structural component that allows sensor component 102 to be removably or permanently attached to camera component 104. The above-described structural components may include screws, bolts, nuts, brackets, clamps, magnets, adhesives, etc., to assist in attachment of the various components.

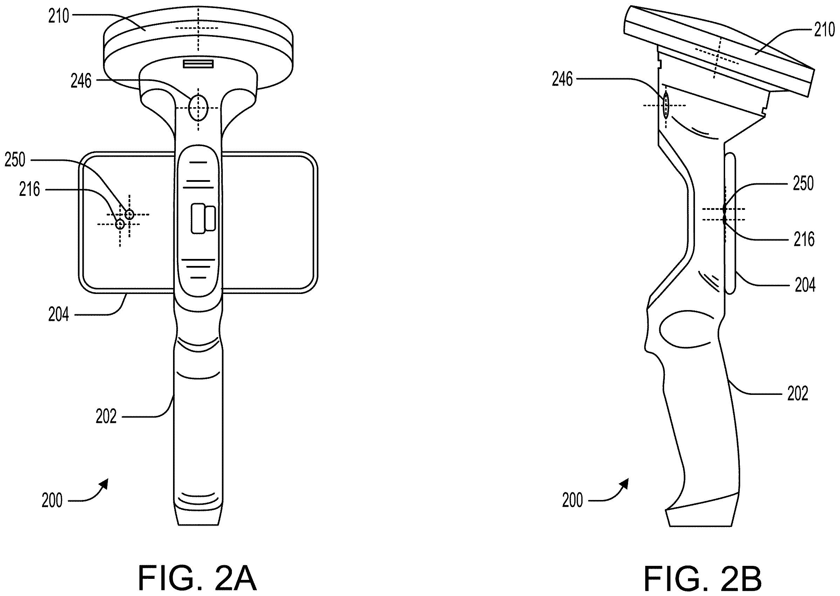

FIGS. 2A and 2B illustrate front and side views of AR device 200 when camera component 204 is attached to sensor component 202, in accordance with some embodiments of the present disclosure. Camera component 204 may include a camera 216 and a depth sensor 250. Sensor component 202 may include a GNSS receiver 210 and an EDM device 246. In the illustrated example, the positions and orientations of camera 216, depth sensor 250, GNSS receiver 210, and EDM device 246 are indicated by crosshairs. The position of GNSS receiver 210 may correspond to the phase center of the receiver's antenna, the position of EDM device 246 may correspond to the location(s) of the device's emitter and/or receiver, and the position of camera 216 may correspond to a point where the camera aperture is located (in accordance with the pinhole camera model).

When camera component 204 is rigidly attached to sensor component 202, known horizontal and vertical offsets may exist between some of the four devices. As such, calculation of the position and orientation of any one of the four devices may be used to obtain the positions and orientations of some of the other three devices. Furthermore, calculation of the position of one of the four devices and the orientation of another one of the four devices may be used to obtain the positions and orientations of some of the four devices. In some examples, the measured position of GNSS receiver 210 may be combined with the measured orientation of camera 250 to obtain the missing orientation of GNSS receiver 210 and the missing position of camera 250 as well as positions and orientations of depth sensor 250 and EDM device 246. Known physical relationships between the devices allows captured data to be properly transformed during data processing by AR device 200.

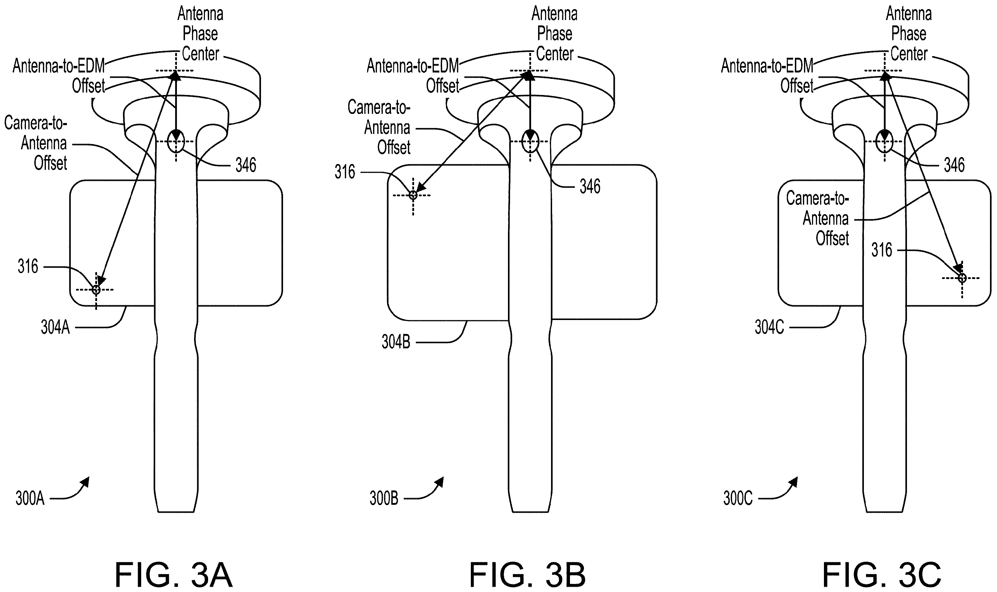

FIGS. 3A-3C illustrate front views of different AR devices 300 having different camera components 304, in accordance with some embodiments of the present disclosure. As the camera component may be provided by the user (e.g., the camera component may include the user's personal smartphone) and attached to the sensor component to form the AR device, the position of the camera relative to the GNSS receiver's antenna will vary depending on the particular device the user attaches. Other factors may also affect the position of the camera relative to the antenna, such as the angle at which the user attaches the camera component to the sensor component, the thickness of any case or protective covering on the camera component, among other possibilities. As such, the camera-to-antenna offset (corresponding to the 3D vector between the position of the camera and the position of the antenna phase center) may be initially unknown to the AR device and may need to be computed during a calibration process.

As shown in FIGS. 3A-3C, while the camera-to-antenna offset between camera 316 and the antenna phase center may vary between different AR devices 300, the antenna-to-EDM offset between the antenna phase center and EDM device 346 remains constant. The antenna-to-EDM offset (corresponding to the 3D vector between the position of the antenna phase center and the position of EDM device 346) is known based on the physical geometry of the sensor component and may be stored at the AR device for use during the calibration process. Upon performing the calibration process and storing the camera-to-antenna offset at the AR device, subsequent uses of the AR device may include skipping the calibration process and retrieving the previously stored camera-to-antenna offset or, optionally, the calibration process may be reperformed during each use.

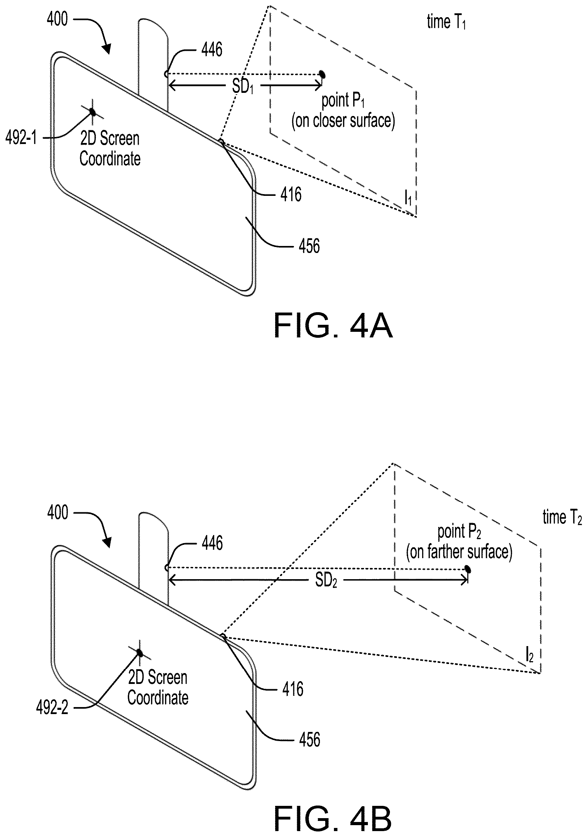

FIGS. 4A-4D illustrate example steps for calibrating an AR device 400, in accordance with some embodiments of the present disclosure. In FIG. 4A, an EDM device 446 of AR device 400 captures a distance SDi to a point Pi on a surface at time Ti by emitting laser light that travels to point Pi, reflects off the surface at point Pi, and travels back to EDM device 446 for detection. In some examples, distance SDi may be between 10 cm and 100 cm. Further at time $T_1$, a camera 416 of AR device 400 may capture a camera image Ii that contains point Pi. For example, the laser light emitted by EDM device 446 may be visible in the camera image Ii at point Pi. In some examples, camera image Ii may be displayed on a display 456 of AR device 400. A 2D screen coordinate 492-1 at which point Pi appears on display 456 may be determined by receiving a user input (e.g., the user presses display 456 at 2D screen coordinate 492-1 where they perceive the reflection of the laser light at point Pi) or by automatic detection by analyzing camera image Ii using image processing techniques.

In FIG. 4B, EDM device 446 captures a distance $SD_2$ to a point $P_2$ on a surface at time $T_2$ by emitting laser light that travels to point $P_2$, reflects off the surface at point $P_2$, and travels back to EDM device 446 for detection. In some examples, distance $SD_2$ may be between 50 cm and 1000 cm. The surface at which point $P_2$ is positioned may be the same surface or a different surface than the surface at which Pi is positioned. For example, between time Ti and time $T_2$, the user may take several steps back while continuing to orient AR device 400 toward the same surface, or the user may rotate and orient AR device toward a different surface. Further at time $T_2$, camera 416 may capture a camera image $I_2$ that contains point $P_2$. For example, the laser light emitted by EDM device 446 may be visible in the camera image $I_2$ at point $P_2$. In some examples, camera image $I_2$ may be displayed on display 456. A 2D screen coordinate 492-2 at which point $P_2$ appears on display 456 may be determined by receiving a user input (e.g., the user presses display 456 at 2D screen coordinate 492-2 where they perceive the reflection of the laser light at point $P_2$) or by automatic detection by analyzing camera image $I_2$ using image processing techniques.

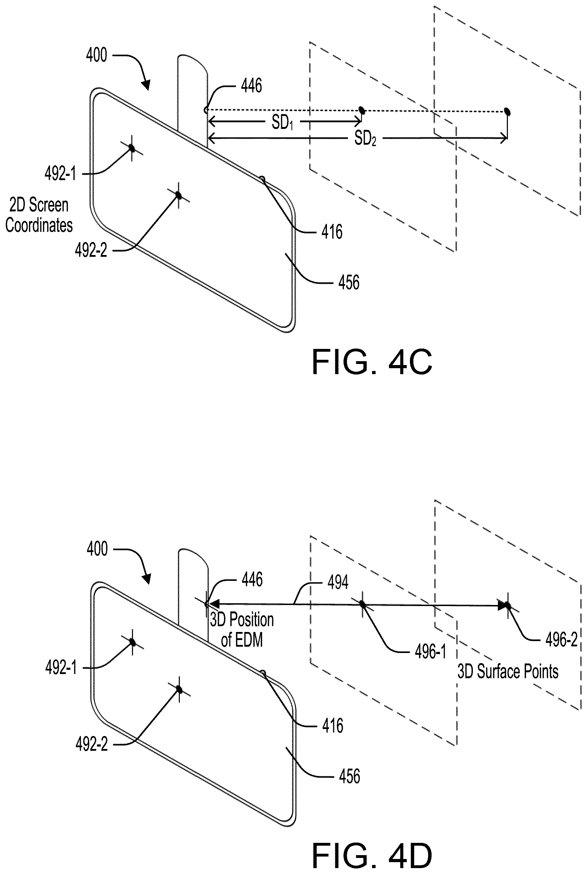

FIG. 4C shows the distances SDi and $SD_2$ and 2D screen coordinates 492 being considered together by aligning along the vector formed by the laser light emitted by EDM device 446. In FIG. 4D, a 3D surface point 496-1 is computed for point Pi by projecting 2D screen coordinate 492-1 into 3D space using distance SDi (plus the hardware offset from EDM device 446 to the camera mount plane) and the intrinsic parameters of camera 416. Similarly, a 3D surface point 496-2 is computed for point $P_2$ by projecting 2D screen coordinate 492-2 into 3D space using distance $SD_2$ (plus the hardware offset from EDM device 446 to the camera mount plane) and the intrinsic parameters of camera 416. In some examples, each of 3D surface points 496 is computed for a 2D screen coordinate (x, y) using the distance $SD$ and the known intrinsic parameters as follows:

$$3D\ Surface\ Point = \left( \frac{(x - o_x) * SD}{f_x}, -\frac{(y - o_y) * SD}{f_y}, SD \right)$$

where $f_x$ and $f_y$ define the focal length of camera 416 and $o_x$ and $o_y$ are the principal point offsets of camera 416.

Further in FIG. 4D, a 3D vector 494 corresponding to the laser light emitted by EDM device 446 is formed between 3D surface points 496. In some examples, 3D vector 494 may be extended beyond 3D surface point 496-1 by distance SDi to compute the 3D position of EDM device 446. Alternatively, 3D vector 494 may be extended from 3D surface point 496-2 by distance $SD_2$ to compute the 3D position of EDM device 446. Using the position of EDM device 446, the known antenna-to-EDM offset, and the position of camera 416 (whose position may be set to (0,0,0) in the AR reference frame), a camera-to-antenna offset may be computed. This offset may then be used to accurately generate and display model data at AR device 400.

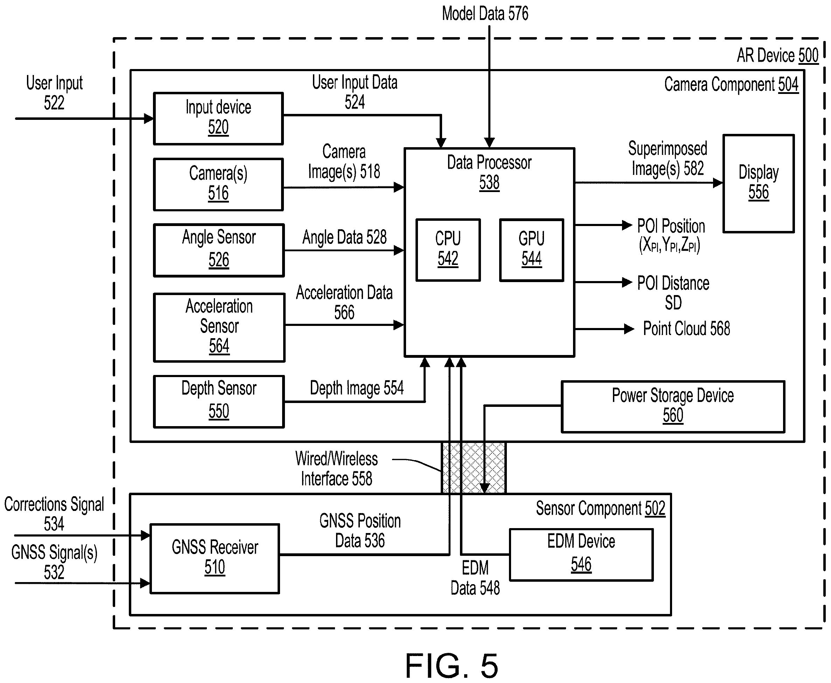

FIG. 5 illustrates a block diagram of AR device 500 having a camera component 504 and a sensor component 502, in accordance with some embodiments of the present disclosure. In the illustrated example, camera component 504 includes an input device 520, a camera 516, an angle sensor 526, an acceleration sensor 564, a depth sensor 550, a data processor 538, a display 556, and a power storage device 560. Further in the illustrated example, sensor component 502 includes a GNSS receiver 510 and an EDM device 546. When attached, data may be communicated from sensor component 502 to camera component 504 through a wired or wireless interface 558. In some examples, interface 558 comprises a universal serial bus (USB) through which power and data can be transferred between the components. For example, using power storage device 560, camera component 504 may transfer power to sensor component 502 via interface 558 to power the devices of sensor component 502.

Input device 520 may receive a user input 522 and generate user input data 524 based on user input 522. Input device 520 may be a button, a switch, a microphone, a touchscreen (e.g., integrated into display 556), among other possibilities. User input 522 may indicate a point of interest (by, for example, moving a cursor being displayed on display 556 so as to indicate the point of interest) for which a GNSS coordinate is to be calculated. Camera 516 may generate one or more camera images 518 of a scene. Camera images 518 may include a single image, multiple images, a stream of images (e.g., a video), among other possibilities. In some examples, camera image 518 may comprise a multi-channel image such as an RGB image.

Angle sensor 526 may generate angle data 528 indicative of the rotational movement of camera component 504 (and likewise AR device 500). Angle sensor 526 may be any electronic device capable of detecting angular rate and/or angular position. In some embodiments, angle sensor 526 may directly detect angular rate and may integrate to obtain angular position, or alternatively angle sensor 526 may directly measure angular position and may determine a change in angular position (e.g., determine the derivative) to obtain angular rate. In many instances, angle sensor 526 is used to determine a yaw angle, a pitch angle, and/or a roll angle corresponding to camera component 504 (and AR device 500). Accordingly, in various embodiments angle data 528 may include one or more of a yaw angle, a pitch angle, a roll angle, an orientation, or raw data from which one or more angles and orientations may be calculated. Angle sensor 526 may include one or more gyroscopes and may be included as part of an inertial measurement unit (IMU).

Acceleration sensor 564 may generate acceleration data 566 indicative of the linear movement of camera component 504 (and likewise AR device 500). Acceleration sensor 564 may be any electronic device capable of detecting linear acceleration. In some embodiments, acceleration sensor 564 may directly measure linear velocity and may determine a change in linear velocity (e.g., determine the derivative) to obtain linear acceleration. Alternatively or additionally, acceleration sensor 564 may directly measure linear position and may determine a change in linear position (e.g., determine the derivative) to obtain linear velocity, from which linear acceleration can be calculated. Acceleration data 566 may include one or more acceleration values or raw data from which one or more acceleration values may be calculated. Acceleration sensor 564 may include one or more accelerometers and may be included as part of an IMU.

Depth sensor 550 may generate a depth image 554 of the site. Depth sensor 550 may include a time-of-flight (ToF) sensor or a structured light sensor. In one example, depth sensor 550 may be a LIDAR sensor that emits laser pulses in various directions using a rotating mirror or a stationary array of lasers. By measuring the time it takes for each laser pulse to travel from the sensor to the object and back (round-trip time), a distance to a real-world object can be measured for each pixel in depth image 554. Depth image 554 may comprise a set of depth values.

GNSS receiver 510 may receive one or more GNSS signals 532 from one or more GNSS satellites to generate position estimates. In some embodiments, GNSS receiver 510 also receives a corrections signal 534 (using a same or different antenna) to apply corrections to the position estimates, allowing the position estimates to improve from meter accuracy to centimeter accuracy in many cases. Alternatively or additionally, corrections signal 534 may be received by camera component 504 (e.g., via a wireless interface), and data processor 538 may apply the corrections to the position estimates after receiving GNSS position data 536 from GNSS receiver 510. EDM device 502 may measure the distance between itself and a point of interest by transmitting pulsed laser light towards the point of interest and measuring the reflected pulses. EDM data 548 may include the measured distance or raw measurements used to compute the distance.

Data processor 538 may include suitable computing and memory resources for processing various input data and generating various outputs. In some examples, data processor 538 includes a central processing unit (CPU) 542 and/or a graphics processing unit (GPU) 544 . Data processor 538 may receive data from various sources, including but not limited to, model data 576 from a 3D model repository, user input data 524 from input device 520, camera image 518 from camera 516, angle data 528 from angle sensor 526, acceleration data 566 from acceleration sensor 564, depth image 554 from depth sensor 550, GNSS position data 536 from GNSS receiver 510 (via interface 558), and EDM data 548 from EDM device 546 (via interface 558).

On the output side, data processor 538 may generate a superimposed image 582, a position of a point of interest $(X_{PI}, Y_{PI}, Z_{PI})$, a distance (e.g., a slope distance SD) between AR device 500 and the point of interest, and/or a point cloud 568. These outputs may be displayed at display 556, saved to a local database, or sent (e.g., wirelessly) to a remote database. Alternatively or additionally, these outputs may be used to perform other operations at AR device 500. For example, point cloud 568 may be accumulated in a point cloud database in which the accumulated point clouds are used for site monitoring.

Data processor 538 may perform operations to convert depth image 554 into point cloud 568. As depth image 554 includes a 2D array of depth values corresponding to each pixel in an image, converting into a point cloud involves reconstructing the 3D positions of points in the site from the depth information. In some examples, the intrinsic parameters of camera 516 can be used to ensure that depth image 554 is properly calibrated. For each pixel (x, y) in depth image 554, the corresponding 3D coordinate is calculated using the depth value z and the known intrinsic parameters as follows:

$$Position = \left( \frac{(x - o_x) * z}{f_x}, -\frac{(y - o_y) * z}{f_y}, z \right)$$

where $f_x$ and $f_y$ define the focal length of camera 516 and $o_x$ and $o_y$ are the principal point offsets of camera 516. In some examples, additional processing on the point cloud may be performed including filtering out noisy points or smoothing surfaces formed by neighboring points.

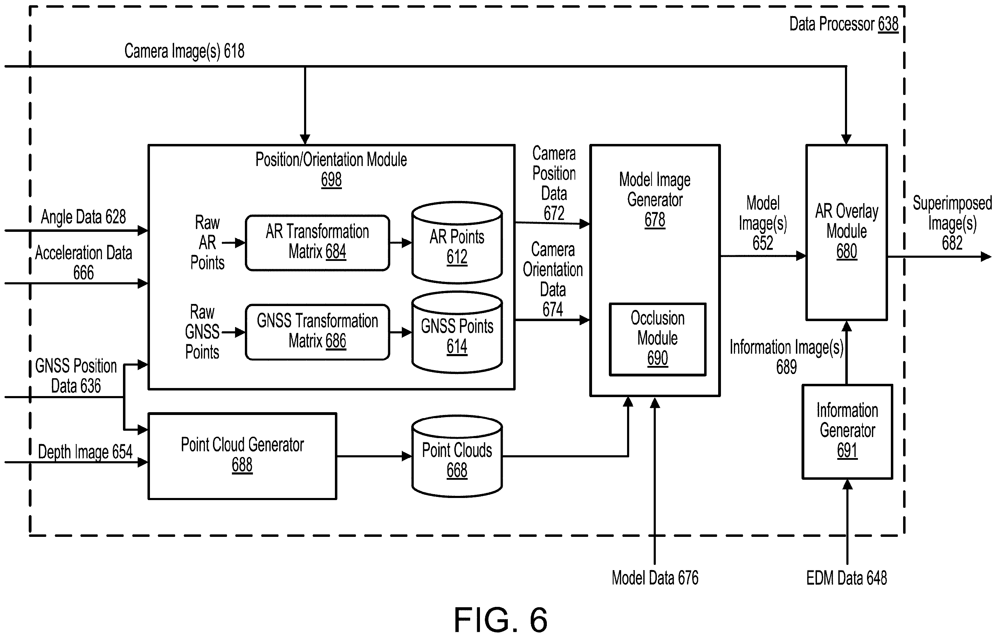

**FIG. 6** illustrates a block diagram of a data processor 638, in accordance with some embodiments of the present disclosure. Each of the modules and generators illustrated in FIG. 6 may be implemented in hardware and/or software. In some embodiments, data processor 638 includes a position/orientation module 698 for determining camera position data 672 and camera orientation data 674. Camera position data 672 may include a 3D coordinate (e.g., three values) representing the position of a camera at a particular time. Camera orientation data 674 may include a 3D vector (e.g., three values) representing the orientation of the camera at the particular time. Position/orientation module 698 may be configured to output positions and orientations periodically, at non-regular intervals, or upon receiving updated data from one or more of angle data 628, acceleration data 666, GNSS position data 636, and camera image 618.

In some embodiments, position/orientation module 698 determines/updates camera position data 672 and camera orientation data 674 based on GNSS position data 636 each time new GNSS position data 636 is received (referred to as a GNSS point). In some embodiments, position/orientation module 698 determines/updates camera position data 672 and camera orientation data 674 based on angle data 628, acceleration data 666, or camera image 618 each time new angle data 628, acceleration data 666, or camera image 618 is received (referred to as an AR point). In some instances, performance of the AR device is improved when AR points and GNSS points are conjunctively used to determine camera position data 672. In some instances, this is accomplished by maintaining two separate and independent frames: an AR reference frame (for tracking and handling AR points 612) and a geospatial reference frame (for tracking and handling GNSS points 614).

The AR reference frame represents a camera space which maintains the relationship between different AR points 612. For example, a first AR point at a first time may be (0, 0, 0) within the AR reference frame, a second AR point at a second time may be (22.3, -12.6, 0) within the AR reference frame, and a third AR point at a third time may be (34.0, -22.9, -0.1) within the AR reference frame. Any operations performed on the AR reference frame, such as shifting or rotating, causes all points within the AR reference frame to be similarly affected. For example, shifting the AR reference frame by (0, 5, 0) would cause the three AR points to become (0, 5, 0), (22.3, -7.6, 0), and (34.0, -17.9, -0.1), respectively. Each shift and rotate experienced by the AR reference frame is reflected in an AR transformation matrix 684, allowing newly captured raw AR points to be consistent with previous AR points. For example, each raw AR point may be transformed (e.g., multiplied) by AR transformation matrix 684 before being added to the dataset or database containing AR points 612, and as new shifts or rotates are applied to the AR reference frame, updates are made to AR transformation matrix 684 and AR points 612.

Similar to the AR reference frame, the geospatial reference frame represents a GNSS space which maintains the relationship between different GNSS points (3D positions determined based on GNSS position data 636). For example, a first GNSS point at a first time may be (10, 10, 10) within the geospatial reference frame, a second GNSS point at a second time may be (32.3, -2.6, 10) within the geospatial reference frame, and a third GNSS point at a third time may be (44.0, -12.9, 9.9) within the geospatial reference frame. Any operations performed on the geospatial reference frame, such as shifting or rotating, causes all points within the geospatial reference frame to be similarly affected. For example, shifting the geospatial reference frame by (0, 5, 0) would cause the three GNSS points to become (10, 15, 10), (32.3, 2.4, 10), and (44.0, -7.9, 9.9), respectively. Each shift and rotate experienced by the geospatial reference frame is reflected in a GNSS transformation matrix 686, allowing newly captured raw GNSS points to be consistent with previous GNSS points. For example, each raw GNSS point may be transformed (e.g., multiplied) by GNSS transformation matrix 686 before being added to the dataset or database containing GNSS points 614, and as new shifts or rotates are applied to the geospatial reference frame, updates are made to GNSS transformation matrix 686 and GNSS points 614.

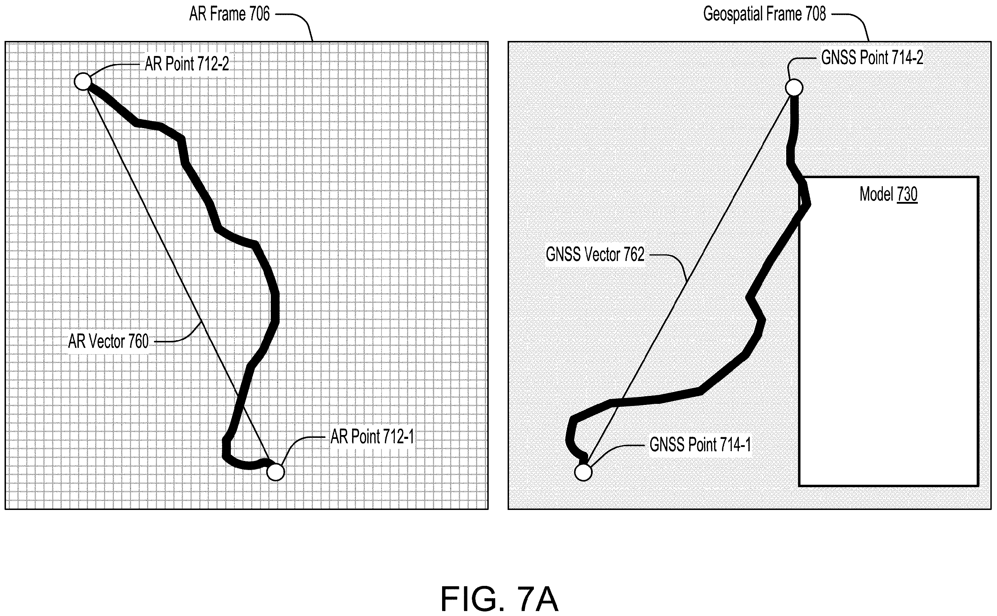

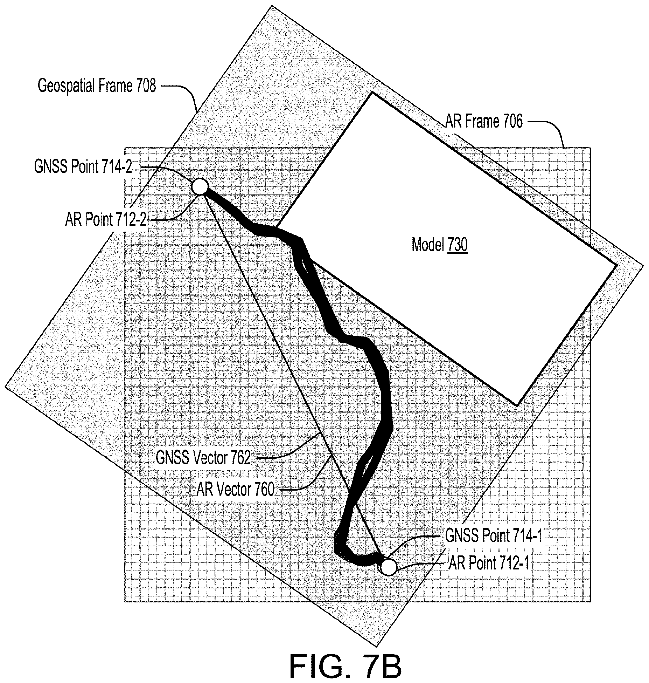

Due to the differences between the two technologies, GNSS position data 636 is generally received less frequently than camera images 618 and does not suffer from initialization and drift issues that are problematic image-based pose data, e.g., the establishment of a new temporary local reference frame with the first AR point is generally set to (0, 0, 0). Furthermore, because of the initialization issues associated with image-based pose data (and also due to its inferior accuracy and drift over time and distance), the AR reference frame and the geospatial reference frame do not necessarily correspond to each other and therefore must be reconciled. To resolve these issues, among others, position/orientation module 698 may perform a series of steps in order to determine camera position data 672 and camera orientation data 674 that incorporate each of camera images 618, angle data 628, acceleration data 666, and GNSS position data 636. These steps are illustrated in reference to FIGS. 7A and 7B.

Data processor 638 may include a point cloud generator 688 that receives depth image 654 and GNSS position data 636 and produces a set of georeferenced points clouds that are stored in a database as point clouds 668. Point cloud generator 688 may first convert depth image 554 into a raw point cloud using the camera's intrinsic parameters. Next, the raw point cloud can be transformed into the AR reference frame using AR transformation matrix 684. GNSS position data 636 may be used by point cloud generator 688 to perform a filtering function such that only points having high accuracy are added to the database containing point clouds 668.

In some embodiments, data processor 638 includes a model image generator 678 for generating a model image 652. Model image generator 678 may receive model data 676 which defines a model (e.g., a building, a structure, a tree, underground utilities, etc.) via a wired or wireless connection. Model data 676 may include 3D coordinates corresponding to the model as well as other information for generating model image 652, such as colors, textures, lighting, etc. In some embodiments, model image generator 678 generates model image 652 based on each of camera position data 672, camera orientation data 674, and model data 676. For example, as the camera position and/or orientation changes, model image 652 may also be modified to accurately reflect the difference in position and/or orientation (e.g., as the position of the camera gets further away from the position of the model, model image 652 may become smaller). In some embodiments, model image 652 is held static until a change in one or more of camera position data 672, camera orientation data 674, and model data 676 is detected by model image generator 678. In some embodiments, portions of model image 652 may be occluded by an occlusion module 690 when real-world objects are positioned in front of the 3D model. In some embodiments, occlusion module 690 may occlude camera image 618 where the 3D model is positioned in front of real-world obj ects.

Alternatively or additionally, point clouds 668 may be visualized at the AR device by inputting point clouds 668 into model image generator 678 and performing similar steps. For example, model image generator 678 may receive point clouds 668 and generate model image 652 so that point clouds 668 may be viewed at their proper georeferenced positions based on camera position data 672 and camera orientation data 674. As the camera position and/or orientation changes, model image 652 may also be modified to accurately reflect the difference in position and/or orientation. Occlusion module 690 may occlude points that are positioned behind real-world objects and optionally occlude portions of camera image 618 where points are positioned in front of real-world objects.

In some embodiments, data processor 638 includes an AR overlay module 680 for generating a superimposed image 682 by superimposing model image 652 onto camera image 618 (or by superimposing camera image 618 onto model image 652). Superimposed image 682 may be outputted to the display which displays superimposed image 682 for viewing by a user. In some instances, a user may select whether or not model image 652 is visible on the display or whether any transparency should be applied to model image 652 or camera image 618. In some embodiments, data processor 638 includes an information generator 691 for generating information that may be added to superimposed image 682. For example, information generator 691 may generate an information image 689 that may visually display the position of the AR device, the orientation of the AR device, the position of the point of interest $(X_{PI}, Y_{PI}, Z_{PI})$, a distance to the point of interest SD (as indicated by EDM data 648), among other possibilities. Accordingly, superimposed image 682 may be generated to include portions of camera image 618, model image 652, and/or information image 689.

FIGS. 7A and 7B illustrate example steps for correlating an AR reference frame 706 with a geospatial reference frame 708, in accordance with some embodiments of the present disclosure. Referring to the left side of FIG. 7A, an AR point 712-1 within an AR reference frame 706 is determined at a first time and an AR point 712-2 within AR reference frame 706 is determined at a second time after the first time. Between the first time and the second time, additional AR points may be determined (as shown by the thick solid line). Referring to the right side of FIG. 7A, a GNSS point 714-1 within a geospatial reference frame 708 is determined at a third time and a GNSS point 714-2 within geospatial reference frame 708 is determined at a fourth time after the third time. Between the third time and the fourth time, additional GNSS points may be determined (as shown by the thick solid line).

AR points 712 may be calculated using vision-based or inertia-based measurements, such as camera images, angle data, and/or acceleration data. GNSS points 714 may be calculated using satellite-based measurements, such as GNSS position data. In some examples, AR point 712-1 may be closely aligned with GNSS point 714-1 in time (e.g., the first time and the third time may be within a threshold time of each other) and AR point 712-2 may be closely aligned with GNSS point 714-2 in time (e.g., the third time and the fourth time may be within a threshold time of each other). In some examples, a model 730 as defined by model data may be registered within geospatial reference frame 708 as shown in FIG. 7A.

To facilitate the manipulation of the reference frames, a GNSS vector 762 may be formed between GNSS points 714 and similarly an AR vector 760 may be formed between AR points 712. Referring to FIG. 7B, one or both of geospatial reference frame 708 and AR reference frame 706 may be shifted such that GNSS point 714-2 is aligned with AR point 712-2, and either geospatial reference frame 708 is rotated to AR reference frame 706 or AR reference frame 706 is rotated to geospatial reference frame 708 by an angle, causing GNSS vector 762 to become aligned with AR vector 760. Alignment may occur over several dimensions. For example, geospatial reference frame 708 may be shifted in each of three dimensions. Upon alignment of GNSS point 714-2 with AR point 712-2, GNSS vector 762 becomes aligned with AR vector 760 on at least one end of GNSS vector 762. Rotation of the reference frames may occur over several dimensions. For example, geospatial reference frame 708 may be rotated in each of three dimensions.

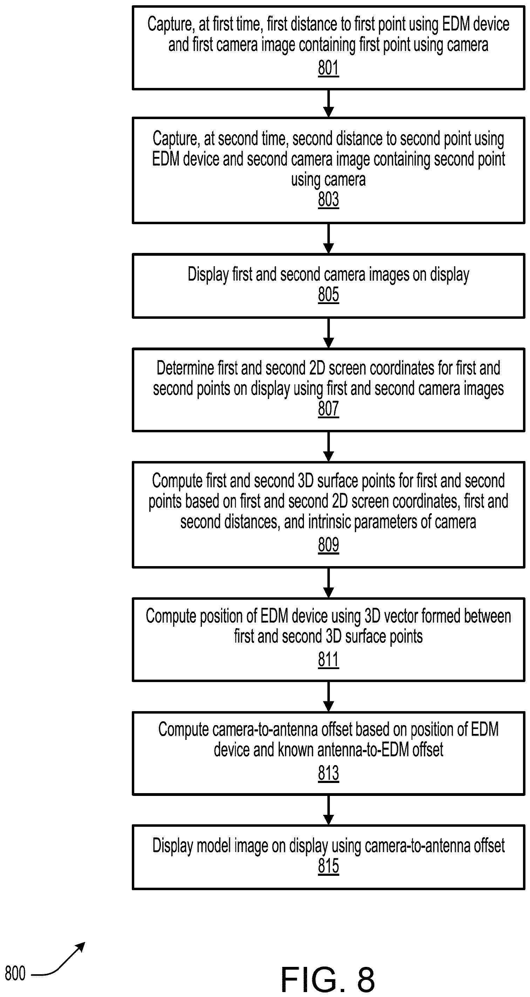

**FIG. 8** illustrates a method 800 of calibrating an AR device (e.g., AR devices 100, 200, 300, 400, 500), in accordance with some embodiments of the present disclosure. One or more steps of method 800 may be omitted during performance of method 800, and steps of method 800 may be performed in any order and/or in parallel. One or more steps of method 800 may be performed by one or more processors, such as those included in a data processor (e.g., data processors 538, 638). Method 800 may be implemented as a computer-readable medium or computer program product comprising instructions which, when the program is executed by one or more computers, cause the one or more computers to carry out the steps of method 800.

At step 801, a first distance (e.g., distance SDi) to a first point (e.g., point Pi) is captured using an EDM device (e.g., EDM devices 146, 246, 346, 446, 546) of the AR device and a first camera image (e.g., camera images 118, 518, 618, Ii) containing the first point is captured using a camera (e.g., cameras 216, 316, 416, 516) of the AR device at a first time (e.g., time Ti).

At step 803, a second distance (e.g., distance $SD_2$) to a second point (e.g., point $P_2$) is captured using the EDM device and a second camera image (e.g., camera images 118, 518, 618, $I_2$) containing the second point is captured using the camera at a second time (e.g., time $T_2$). The second time may be after the first time. The first point may be positioned at a first surface and the second point may be positioned at a second surface or the first point and the second point may be positioned at a same surface.

At step 805, the first and second camera images are displayed on a display (displays 156, 456, 556) of the AR device. The first and second camera images may be displayed separately (e.g., at different times) or simultaneously.

At step 807, the AR device determines first and second 2D screen coordinates (e.g., 2D screen coordinates 492) for the first and second points on the display using the first and second camera images. The AR device may determine the first 2D screen coordinate for the first point on the display using the first camera image and the second 2D screen coordinate for the second point on the display using the second camera image.

At step 809, the AR device computes first and second 3D surface points (e.g., 3D surface points 496) for the first and second points based on the first and second 2D screen coordinates and the first and second distances. The AR device may compute the first 3D surface point for the first point based on the first 2D screen coordinate and the first distance and the second 3D surface point for the second point based on the second 2D screen coordinate and the second distance. The first and second 3D surface points may be computed further based on intrinsic parameters of the camera.

At step 811, the AR device computes a position of the EDM device using a 3D vector (e.g., 3D vector 494) formed between the first and second 3D surface points.

At step 813, the AR device computes a camera-to-antenna offset based on the position of the EDM device and a known antenna-to-EDM offset. The known antenna-to-EDM offset may correspond to a 3D vector between a phase center of an antenna of a GNSS receiver (e.g., GNSS receivers 110, 210, 510) of the AR device and the position of the EDM device. The camera-to-antenna offset may correspond to a 3D vector between a position of the camera and the phase center of the antenna.

At step 815, a model image (e.g., model images 152, 552, 652) is displayed on the display using the camera-to-antenna offset.

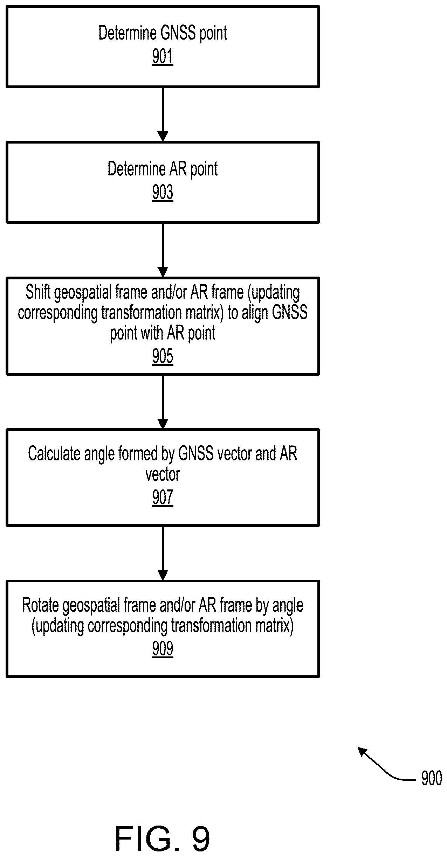

**FIG. 9** illustrates a method 900 of correlating an AR reference frame (e.g., AR reference frame 706) with a geospatial reference frame (e.g., geospatial reference frame 708) for an AR device (e.g., AR devices 100, 200, 300, 400, 500), in accordance with some embodiments of the present disclosure. One or more steps of method 900 may be omitted during performance of method 900, and steps of method 900 may be performed in any order and/or in parallel. One or more steps of method 900 may be performed by one or more processors, such as those included in a data processor (e.g., data processors 538, 638). Method 900 may be implemented as a computer-readable medium or computer program product comprising instructions which, when the program is executed by one or more computers, cause the one or more computers to carry out the steps of method 900.

At step 901, the AR device determines a GNSS point (e.g., GNSS point 714-2) within the geospatial reference frame based on GNSS signals (e.g., GNSS signals 532) captured by a GNSS receiver (e.g., GNSS receivers 110, 210, 510). The GNSS point may be a position of the AR device within the geospatial reference frame.

At step 903, the AR device determines an AR point (e.g., AR point 712-2) within the AR reference frame based on a set of vision-based or inertia-based measurements including one or more camera images (e.g., camera images 118, 518, 618) captured by the camera, angle data (e.g., angle data 528, 628) captured by the angle sensor, and/or acceleration data (e.g., acceleration data 566, 666) captured by the acceleration sensor. For example, the AR point may be determined using visual odometry, visual inertial odometry (VIO), or simultaneous localization and mapping (SLAM) techniques. The AR point may be a position of the AR device within the AR reference frame.

At step 905, the AR device shifts the geospatial reference frame and/or the AR reference frame to align the GNSS point with the AR point. The geospatial reference frame and/or the AR reference frame may be shifted in at least one of three dimensions. Shifting the geospatial reference frame and/or the AR reference frame in a particular dimension causes all points in the geospatial reference frame and/or the AR reference frame to be translated by a particular amount. Step 905 may include updating an AR transformation matrix (e.g., AR transformation matrix 684) and/or a GNSS transformation matrix (e.g., GNSS transformation matrix 686) in accordance with the shift(s) of the geospatial reference frame and/or the AR reference frame.

At step 907, an angle between an GNSS vector (e.g., GNSS vector 762) and an AR vector (e.g., AR vector 760) is calculated. The GNSS vector may be formed between the (current) GNSS point and a previous GNSS point (e.g., GNSS point 714-1) and the AR vector may be formed between the (current) AR point and a previous AR point (e.g., AR point 712-1).

At step 909, the geospatial reference frame and/or the AR reference frame is rotated by the angle to align the GNSS vector with the AR vector. The geospatial reference frame and/or the AR reference frame may be rotated in at least one of three dimensions. Rotating the geospatial reference frame and/or the AR reference frame in a particular dimension causes all points in the geospatial reference frame and/or the AR reference frame (except for the GNSS point and/or the AR point) to be rotated with respect to the GNSS point and/or the AR point. Step 909 may include updating the AR transformation matrix and/or the GNSS transformation matrix in accordance with the rotate(s) of the geospatial reference frame and/or the AR reference frame.

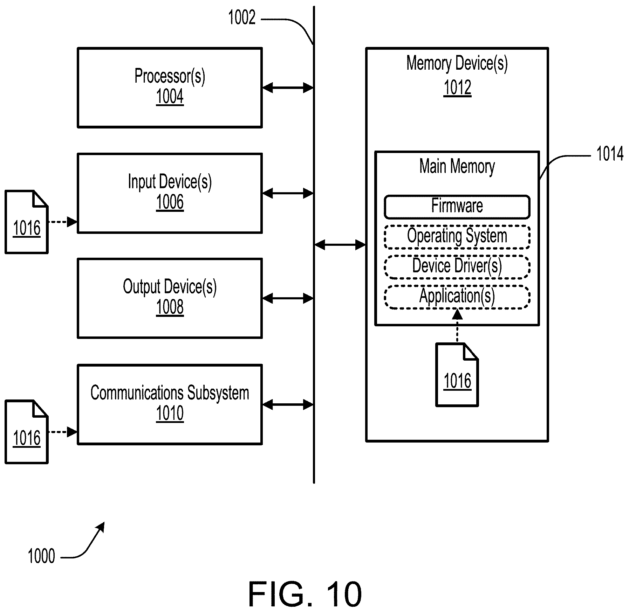

**FIG. 10** illustrates an example computer system 1000 comprising various hardware elements, in accordance with some embodiments of the present disclosure. Computer system 1000 may be incorporated into or integrated with devices described herein and/or may be configured to perform some or all of the steps of the methods provided by various embodiments. It should be noted that FIG. 10 is meant only to provide a generalized illustration of various components, any or all of which may be utilized as appropriate. FIG. 10, therefore, broadly illustrates how individual system elements may be implemented in a relatively separated or relatively more integrated manner.

In the illustrated example, computer system 1000 includes a communication medium 1002, one or more processor(s) 1004, one or more input device(s) 1006, one or more output device(s) 1008, a communications subsystem 1010, and one or more memory device(s) 1012. Computer system 1000 may be implemented using various hardware implementations and embedded system technologies. For example, one or more elements of computer system 1000 may be implemented within an integrated circuit (IC), an application-specific integrated circuit (ASIC), an application-specific standard product (ASSP), a field-programmable gate array (FPGA), such as those commercially available by XILINX®, INTEL®, or LATTICE SEMICONDUCTOR®, a system-on-a-chip (SoC), a microcontroller, a printed circuit board (PCB), and/or a hybrid device, such as an SoC FPGA, among other possibilities.

The various hardware elements of computer system 1000 may be communicatively coupled via communication medium 1002. While communication medium 1002 is illustrated as a single connection for purposes of clarity, it should be understood that communication medium 1002 may include various numbers and types of communication media for transferring data between hardware elements. For example, communication medium 1002 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 1002 may include one or more buses that connect the pins of the hardware elements of computer system 1000. For example, communication medium 1002 may include a bus that connects processor(s) 1004 with main memory 1014, referred to as a system bus, and a bus that connects main memory 1014 with input device(s) 1006 or output device(s) 1008, referred to as an expansion bus. The system bus may itself consist of several buses, including an address bus, a data bus, and a control bus. The address bus may carry a memory address from processor(s) 1004 to the address bus circuitry associated with main memory 1014 in order for the data bus to access and carry the data contained at the memory address back to processor(s) 1004. The control bus may carry commands from processor(s) 1004 and return status signals from main memory 1014. Each bus may include multiple wires for carrying multiple bits of information and each bus may support serial or parallel transmission of data.

Processor(s) 1004 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 1004 may include one or more multi-core processors, in which each core may read and execute program instructions concurrently with the other cores, increasing speed for programs that support multithreading.

Input device(s) 1006 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 1006 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 1008 may include one or more of various devices that convert information into human-readable form, such as without limitation a display device, a speaker, a printer, a haptic or tactile device, and/or the like. Output device(s) 1008 may also include devices for writing to removable storage devices or other removable media, such as those described in reference to input device(s) 1006. Output device(s) 1008 may also include various actuators for causing physical movement of one or more components. Such actuators may be hydraulic, pneumatic, electric, and may be controlled using control signals generated by computer system 1000.

Communications subsystem 1010 may include hardware components for connecting computer system 1000 to systems or devices that are located external to computer system 1000, such as over a computer network. In various embodiments, communications subsystem 1010 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH® device, an IEEE 802.11 device, a Wi-Fi device, a Wi-Max device, a cellular device), among other possibilities.

Memory device(s) 1012 may include the various data storage devices of computer system 1000. For example, memory device(s) 1012 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 1004 and memory device(s) 1012 are illustrated as being separate elements, it should be understood that processor(s) 1004 may include varying levels of on-processor memory, such as processor registers and caches that may be utilized by a single processor or shared between multiple processors.

Memory device(s) 1012 may include main memory 1014, which may be directly accessible by processor(s) 1004 via the address and data buses of communication medium 1002. For example, processor(s) 1004 may continuously read and execute instructions stored in main memory 1014. As such, various software elements may be loaded into main memory 1014 to be read and executed by processor(s) 1004 as illustrated in FIG. 10. Typically, main memory 1014 is volatile memory, which loses all data when power is turned off and accordingly needs power to preserve stored data. Main memory 1014 may further include a small portion of non-volatile memory containing software (e.g., firmware, such as BIOS) that is used for reading other software stored in memory device(s) 1012 into main memory 1014. In some embodiments, the volatile memory of main memory 1014 is implemented as RAM, such as dynamic random-access memory (DRAM), and the non-volatile memory of main memory 1014 is implemented as read-only memory (ROM), such as flash memory, erasable programmable read-only memory (EPROM), or electrically erasable programmable read-only memory (EEPROM).

Computer system 1000 may include software elements, shown as being currently located within main memory 1014, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 1016, which are executable by computer system 1000. In one example, such instructions 1016 may be received by computer system 1000 using communications subsystem 1010 (e.g., via a wireless or wired signal that carries instructions 1016), carried by communication medium 1002 to memory device(s) 1012, stored within memory device(s) 1012, read into main memory 1014, and executed by processor(s) 1004 to perform one or more steps of the described methods. In another example, instructions 1016 may be received by computer system 1000 using input device(s) 1006 (e.g., via a reader for removable media), carried by communication medium 1002 to memory device(s) 1012, stored within memory device(s) 1012, read into main memory 1014, and executed by processor(s) 1004 to perform one or more steps of the described methods.

In some embodiments of the present disclosure, instructions 1016 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 1000. For example, the non-transitory computer-readable medium may be one of memory device(s) 1012 (as shown in FIG. 10). In some cases, the non-transitory computer-readable medium may be separate from computer system 1000. In one example, the non-transitory computer-readable medium may be a removable medium provided to input device(s) 1006 (as shown in FIG. 10), such as those described in reference to input device(s) 1006, with instructions 1016 being read into computer system 1000 by input device(s) 1006. In another example, the non-transitory computer-readable medium may be a component of a remote electronic device, such as a mobile phone, that may wirelessly transmit a data signal that carries instructions 1016 to computer system 1000 and that is received by communications subsystem 1010 (as shown in FIG. 10).

Instructions 1016 may take any suitable form to be read and/or executed by computer system 1000. For example, instructions 1016 may be source code (written in a human-readable programming language such as Java, C, C++, C#, Python), object code, assembly language, machine code, microcode, executable code, and/or the like. In one example, instructions 1016 are provided to computer system 1000 in the form of source code, and a compiler is used to translate instructions 1016 from source code to machine code, which may then be read into main memory 1014 for execution by processor(s) 1004. As another example, instructions 1016 are provided to computer system 1000 in the form of an executable file with machine code that may immediately be read into main memory 1014 for execution by processor(s) 1004. In various examples, instructions 1016 may be provided to computer system 1000 in encrypted or unencrypted form, compressed or uncompressed form, as an installation package or an initialization for a broader software deployment, among other possibilities.

In one aspect of the present disclosure, a system (e.g., computer system 1000) is provided to perform methods in accordance with various embodiments of the present disclosure. For example, some embodiments may include a system comprising one or more processors (e.g., processor(s) 1004) that are communicatively coupled to a non-transitory computer-readable medium (e.g., memory device(s) 1012 or main memory 1014). The non-transitory computer-readable medium may have instructions (e.g., instructions 1016) stored therein that, when executed by the one or more processors, cause the one or more processors to perform the methods described in the various embodiments.

In another aspect of the present disclosure, a computer-program product that includes instructions (e.g., instructions 1016) is provided to perform methods in accordance with various embodiments of the present disclosure. The computer-program product may be tangibly embodied in a non-transitory computer-readable medium (e.g., memory device(s) 1012 or main memory 1014). The instructions may be configured to cause one or more processors (e.g., processor(s) 1004) to perform the methods described in the various embodiments.

In another aspect of the present disclosure, a non-transitory computer-readable medium (e.g., memory device(s) 1012 or main memory 1014) is provided. The non-transitory computer-readable medium may have instructions (e.g., instructions 1016) stored therein that, when executed by one or more processors (e.g., processor(s) 1004), cause the one or more processors to perform the methods described in the various embodiments.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method of calibrating a device having a camera, an antenna, an electronic distance measurement (EDM) device, and a display, the method comprising:

   capturing, at a first time, a first distance to a first point using the EDM device and a first camera image containing the first point using the camera;
   capturing, at a second time, a second distance to a second point using the EDM device and a second camera image containing the second point using the camera;
   determining first and second 2D screen coordinates for the first and second points on the display using the first and second camera images;
   computing first and second 3D surface points for the first and second points based on the first and second 2D screen coordinates and the first and second distances;
   computing a position of the EDM device using a 3D vector formed between the first and second 3D surface points; and
   computing a camera-to-antenna offset based on the position of the EDM device and a known antenna-to-EDM offset.

2. The method of claim 1, wherein the first and second 3D surface points are computed further based on intrinsic parameters of the camera.

3. The method of claim 1 or 2, wherein the known antenna-to-EDM offset comprises a 3D vector between a phase center of the antenna and the position of the EDM device, and wherein the camera-to-antenna offset comprises a 3D vector between a position of the camera and the phase center of the antenna.

4. The method of any one of the preceding claims, wherein determining the first and second 2D screen coordinates for the first and second points on the display includes:

   receiving a user input identifying the first and second 2D screen coordinates; or
   analyzing the first and second camera images to automatically identify the first and second 2D screen coordinates.

5. The method of any one of the preceding claims, further comprising:

   displaying the first and second camera images on the display; and/or
   displaying a model image on the display using the camera-to-antenna offset.

6. The method of any one of the preceding claims, wherein the first point is positioned at a first surface and the second point is positioned at a second surface or the first point and the second point are positioned at a same surface.

7. An apparatus comprising:

   an antenna;
   an electronic distance measurement (EDM) device having a known antenna-to-EDM offset from the antenna, wherein the EDM device is configured to capture, at a first time, a first distance to a first point and capture, at a second time, a second distance to a second point;

a camera configured to capture, at the first time, a first camera image containing the first point and capture, at the second time, a second camera image containing the second point; and
a display;
wherein the apparatus is configured to:

determine first and second 2D screen coordinates for the first and second points on the display using the first and second camera images;
compute first and second 3D surface points for the first and second points based on the first and second 2D screen coordinates and the first and second distances;
compute a position of the EDM device using a 3D vector formed between the first and second 3D surface points; and
compute a camera-to-antenna offset based on the position of the EDM device and the known antenna-to-EDM offset.

8. The apparatus of claim 7, wherein the first and second 3D surface points are computed further based on intrinsic parameters of the camera.

9. The apparatus of claim 7 or 8, wherein the known antenna-to-EDM offset comprises a 3D vector between a phase center of the antenna and the position of the EDM device, and wherein the camera-to-antenna offset comprises a 3D vector between a position of the camera and the phase center of the antenna.

10. The apparatus of any one of claims 7-9, wherein determining the first and second 2D screen coordinates for the first and second points on the display includes:

receiving a user input identifying the first and second 2D screen coordinates; or
analyzing the first and second camera images to automatically identify the first and second 2D screen coordinates.

11. The apparatus of any one of claims 7-10, wherein the apparatus is further configured to display the first and second camera images on the display; and/or to display a model image on the display using the camera-to-antenna offset.

12. The apparatus of any one of claims 7-11, wherein the first point is positioned at a first surface and the second point is positioned at a second surface or the first point and the second point are positioned at a same surface.

13. The apparatus of any one of claims 7-12, wherein the apparatus is an augmented reality (AR) device.

14. The apparatus of any one of claims 7-13, further comprising:

a camera component including the camera and the display; and
a sensor component including the antenna and the EDM device, and wherein the camera component is separable from and configured to removably attach to the sensor component.

15. A non-transitory computer-readable medium comprising instructions that, when executed by one or more processors, cause the one or more processors to perform the method of any one of claims 1-6.

FIG. 1

FIG. 2B

FIG. 2A

FIG. 3A

FIG. 3B

FIG. 3C

Antenna Phase Center

Antenna-to-EDM Offset

Camera-to-Antenna Offset

346

316

304A

300A

304B

300B

304C

300C

400

446

time T₁

SD₁

point P₁
(on closer surface)

492-1

2D Screen
Coordinate

416

456

I₁

# FIG. 4A

400

446

time T₂

point P₂
(on farther surface)

SD₂

2D Screen
Coordinate

492-2

416

456

I₂

# FIG. 4B

FIG. 4C

FIG. 4D

FIG. 5

FIG. 6

AR Frame 706

AR Point 712-2

AR Vector 760

AR Point 712-1

Geospatial Frame 708

GNSS Point 714-2

Model 730

GNSS Vector 762

GNSS Point 714-1

FIG. 7A

EP 4 647 800 A1

FIG. 7B

Geospatial Frame 708

AR Frame 706

GNSS Point 714-2

AR Point 712-2

Model 730

GNSS Vector 762

AR Vector 760

GNSS Point 714-1

AR Point 712-1

Capture, at first time, first distance to first point using EDM device
and first camera image containing first point using camera
801

Capture, at second time, second distance to second point using
EDM device and second camera image containing second point
using camera
803

Display first and second camera images on display
805

Determine first and second 2D screen coordinates for first and
second points on display using first and second camera images
807

Compute first and second 3D surface points for first and second
points based on first and second 2D screen coordinates, first and
second distances, and intrinsic parameters of camera
809

Compute position of EDM device using 3D vector formed between
first and second 3D surface points
811

Compute camera-to-antenna offset based on position of EDM
device and known antenna-to-EDM offset
813

Display model image on display using camera-to-antenna offset
815

800

FIG. 8

```
┌─────────────────────────────────────┐
│          Determine GNSS point        │
│                 901                  │
└─────────────────────────────────────┘
                   │
                   ▼
┌─────────────────────────────────────┐
│           Determine AR point         │
│                 903                  │
└─────────────────────────────────────┘
                   │
                   ▼
┌─────────────────────────────────────┐
│ Shift geospatial frame and/or AR     │
│ frame (updating corresponding        │
│ transformation matrix) to align GNSS │
│ point with AR point                  │
│                 905                  │
└─────────────────────────────────────┘
                   │
                   ▼
┌─────────────────────────────────────┐
│ Calculate angle formed by GNSS       │
│ vector and AR vector                 │
│                 907                  │
└─────────────────────────────────────┘
                   │
                   ▼
┌─────────────────────────────────────┐
│ Rotate geospatial frame and/or AR    │
│ frame by angle (updating             │
│ corresponding transformation matrix) │
│                 909                  │
└─────────────────────────────────────┘
```

900

FIG. 9

EP 4 647 800 A1

1002

Processor(s)
1004

Input Device(s)
1006

1016

Output Device(s)
1008

Communications Subsystem
1010

1016

Memory Device(s)
1012

Main Memory —1014

Firmware

Operating System

Device Driver(s)

Application(s)

1016

1000

FIG. 10

Europäisches
Patentamt

European
Patent Office

Office européen
des brevets

## EUROPEAN SEARCH REPORT

**Application Number**

EP 24 22 2766

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 693 126 B2 (TRIMBLE INC [US]) 4 July 2023 (2023-07-04) * figures 1,2A,2B, 10,12,15,16,20 * * column 18, line 20 - column 20, line 41 * | 1-15 | INV. G01S5/16 |
| Y | LIU ZEWEI ET AL: "Calibration of a single-point laser range finder and a camera", OPTICAL AND QUANTUM ELECTRONICS, SPRINGER US, NEW YORK, vol. 50, no. 12, 16 November 2018 (2018-11-16), pages 1-13, XP036649345, ISSN: 0306-8919, DOI: 10.1007/S11082-018-1702-Y [retrieved on 2018-11-16] * figure 4 * * pages 3-4, sections 2 and 2.1 * * pages 7-8, section 3 * | 1-15 | |
| A | TU YUHONG ET AL: "An Accurate and Stable Extrinsic Calibration for a Camera and a 1D Laser Range Finder", IEEE SENSORS JOURNAL, IEEE, vol. 22, no. 10, 11 April 2022 (2022-04-11), pages 9832-9842, XP011908377, ISSN: 1530-437X, DOI: 10.1109/JSEN.2022.3166243 [retrieved on 2022-04-11] * the whole document * | 1-15 | TECHNICAL FIELDS SEARCHED (IPC) G01S |

The present search report has been drawn up for all claims

| Place of search | Date of completion of the search | Examiner |
|---|---|---|
| Munich | 10 June 2025 | Hekmat, Taymoor |

EPO FORM 1503 03.82 (P04C01)

# EP 4 647 800 A1

## ANNEX TO THE EUROPEAN SEARCH REPORT
## ON EUROPEAN PATENT APPLICATION NO.

EP 24 22 2766

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| US 11693126 B2 | 04-07-2023 | NONE | |

For more details about this annex : see Official Journal of the European Patent Office, No. 12/82